# EUROPEAN PATENT APPLICATION

(11) **EP 2 910 154 A1**
(43) Date of publication of application: **26.08.2015**
(21) Application number: 15153090.4
(22) Date of filing: 29.01.2015
(51) Int. Cl.: A47J 27/00

(54) **Glass pan having an electromagnetically formed induction layer**

(30) Priority: 25.02.2014 US 201414188771
(71) Applicant: Whirlpool Corporation, Benton Harbor, MI 49022 (US)
(72) Inventor: Millett, Frederick A., 21025 Comerio (IT)
(74) Representative: Guerci, Alessandro

(57) **Abstract**

An induction pan (10) for an induction cooking appliance (12) includes an electromagnetically contoured induction layer (14), wherein the electromagnetically contoured induction layer (14) is ferromagnetic and electrically conductive. The induction pan (10) includes a vessel (16) having a base (18), a sidewall (20) extending from the base (18) and defining a rim (22), an interior surface (24) defining an inner volume (26), and an exterior surface (28). The vessel (16) is at least partially translucent. The electromagnetically contoured induction layer (14) is engaged to at least one of the interior surface (24) and the exterior surface (28) of the vessel (16) proximate the base (18), and is in thermal communication with the inner volume (26). At least one retaining feature (52) extends from at least one of the interior surface (24) and the exterior surface (28) of the vessel (16), wherein the electromagnetically contoured induction layer (14) extends at least partially over the retaining feature (52).

## Description

### TECHNICAL FIELD

The present invention generally relates to devices in the field of cooking pans for use on induction cooktops, specifically, clear cooking pans that have an induction layer that is electromagnetically formed onto at least a portion of the cooking pan.

### BACKGROUND

Concerns over the use of metal coated nonstick cookware products have surfaced over the last several years due to the dangers and concerns of the nonstick coating flaking off into cooked foods and subsequently ingested. Thus, the use of glass cookware is a desired alternative as the cookware does not require the use of nonstick coatings. Glass cookware provides many benefits, including, but not limited to being a nonporous cooking surface that resists odors, flavors and stains. However, glass cookware cannot be used on an induction cooktop as the glass fails to include electromagnetic properties that are utilized in and induction heating device.

Therefore, there is a need in the art of cooking to provide cookware that provides the benefits of glass for use on and induction cooking surface.

### SUMMARY

In at least one aspect, an induction pan for an induction cooking appliance includes an electromagnetically contoured induction layer. The electromagnetically contoured induction layer is ferromagnetic and electrically conductive. The induction pan includes a vessel having a base, a sidewall extending from the base and defining a rim, an interior surface defining an inner volume, and an exterior surface. The vessel is at least partially translucent. The electromagnetically contoured induction layer is engaged to at least one of the interior surface and the exterior surface of the vessel proximate the base, and is in thermal communication with the inner volume. At least one retaining feature extends from at least one of the interior surface and the exterior surface of the vessel, wherein the electromagnetically contoured induction layer extends at least partially over the retaining feature.

In at least another aspect, an induction pan for an induction cooking appliance includes an induction layer, wherein the induction layer is ferromagnetic and electrically conductive. The induction pan includes an at least partially translucent vessel having a base and a sidewall extending from the base that define an inner volume and an exterior surface, and at least one retaining feature extending from the exterior surface proximate the base. The induction layer extends over at least a portion of the exterior surface proximate the base and engages the at least one retaining feature, and is in thermal communication with the inner volume.

In at least another aspect, a method for forming an induction pan for an induction cooking appliance includes the steps of forming an induction layer, wherein the induction layer includes a ferromagnetic material and an electrically conductive material. The method also includes forming a substantially translucent vessel having a base and a sidewall extending from the base that define an exterior surface and an interior surface that defines an inner volume, forming at least one retaining protrusion extending from at least one of the interior surface and the exterior surface of the vessel, and disposing the induction layer at the base of the vessel proximate the at least one retaining protrusion and electromagnetically forming the induction layer to at least one of the interior surface and the exterior surface of the vessel. The induction layer is in thermal communication with the inner volume of the vessel, and engages at least the base of the vessel and the at least one retaining protrusion.

### BRIEF DESCRIPTION OF THE DRAWINGS

In the drawings:
FIG. 1 is a top front perspective view of an induction cooking appliance with one embodiment of the induction cooking pan disposed thereon;
FIG. 2 is a top perspective view of the induction cooking pan of FIG. 1;
FIG. 3 is a cross-sectional view of the embodiment of the induction cooking pan of FIG. 2 taken along line III-III;
FIG. 4 is a partially exploded top perspective view of the induction cooking pan of FIG. 2 showing the induction layer in a partially-formed state;
FIG. 5 is a partially exploded top perspective view of an embodiment of the induction cooking pan with the induction layer in a partially-formed state;
FIG. 6 is a side cross-sectional view of an alternate embodiment of the induction cooking pan having a covering layer surrounding the induction layer;
FIG. 7 is a detail cross-sectional view of an embodiment of the induction cooking pan, showing the induction layer about to be electromagnetically formed to a surface of the cooking pan;
FIG. 8 is a detail cross-sectional view of the induction cooking pan of FIG. 7, showing the induction layer electromagnetically formed to a surface of the cooking pan;
FIG. 9 is a detail cross-sectional view of the induction cooking pan of FIG. 7 taken along line IX-IX, including schematic representations of the electromagnetic forming process; and
FIG. 10 is a schematic flow diagram illustrating a method for forming a glass pan for an induction cooking appliance.

### DETAILED DESCRIPTION

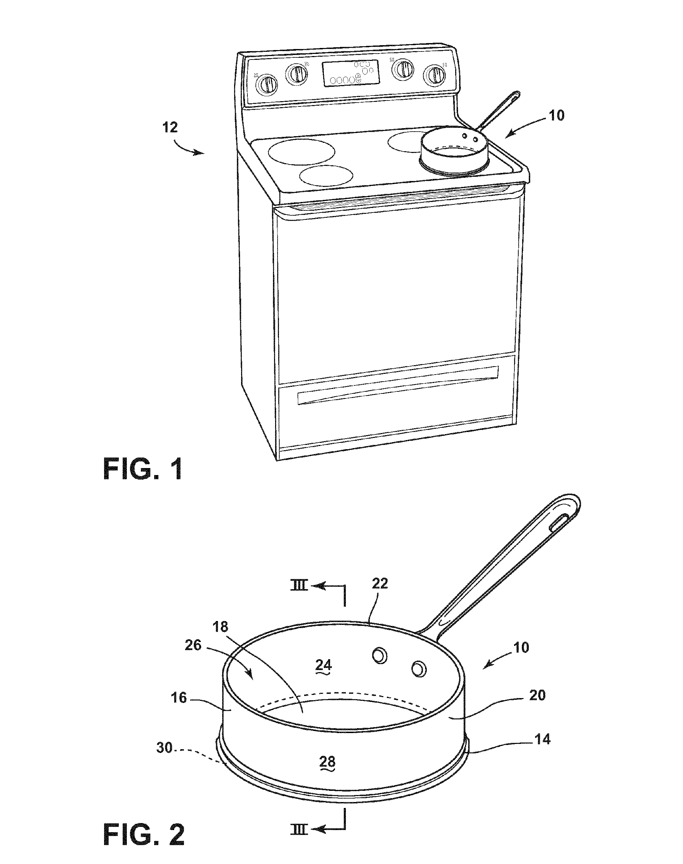

As illustrated in the embodiment of FIGS. 1-3, reference numeral 10 generally refers to an induction pan for an induction cooking appliance, having an electromagnetically contoured induction layer 14, wherein the induction layer 14 is ferromagnetic and electrically conductive. The induction pan 10 also includes a vessel 16 having a base 18, a sidewall 20 extending from the base 18 defining a rim 22, an interior surface 24 defining an inner volume 26, and an exterior surface 28. The vessel 16 is at least partially translucent. The electromagnetically contoured induction layer 14 is engaged to at least one of the interior surface 24 and the exterior surface 28 of the vessel 16 proximate the base 18, wherein the electromagnetically contoured induction layer 14 is in thermal communication with the inner volume 26. At least one retaining feature 30 is defined by at least one of the interior surface 24 and the exterior surface 28 of the vessel 16, wherein the electromagnetically contoured induction layer 14 extends at least partially over the retaining feature 30.

Referring again to the embodiment of FIGS. 1-3, the induction pan 10 is configured to be used with an induction cooking appliance 12, wherein the induction cooking appliance 12 creates a magnetic field that is configured to induce an electrical current within the induction layer 14 of the induction pan 10. Because the induction layer 14 is at least partially electrically resistive, the induced electrical current 76 within the induction layer 14 creates heat within the induction layer 14. This heat from the induced electrical current 76 in the induction layer 14 is transferred into the inner volume 26 of the induction pan 10, such that cooking operations can be accomplished within the inner volume 26 of the induction pan 10.

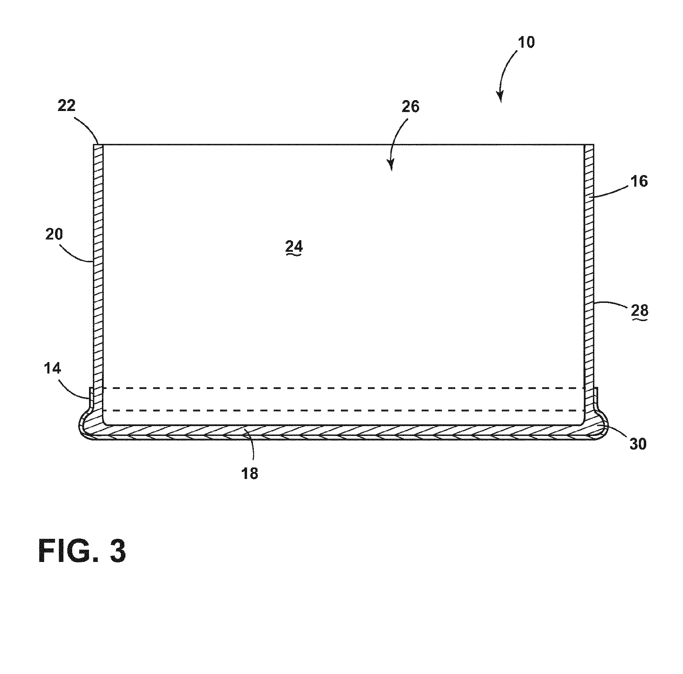

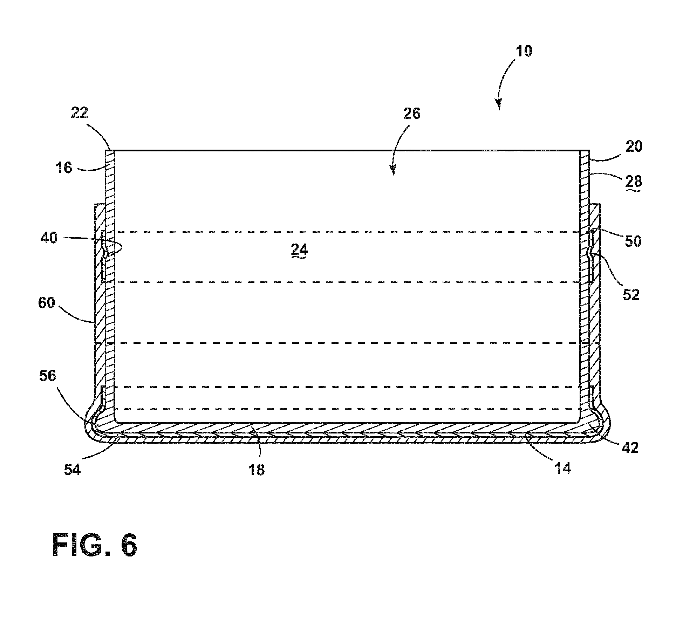

Referring again to the embodiments shown in FIGS. 2 and 3, the induction layer 14 is attached to the vessel 16 such that an inner or outer surface of the electromagnetically contoured induction layer 14 is directly engaged with the retaining feature 30 that extends from or is defined within the exterior and/or interior surface 28, 24 of the vessel 16. It is contemplated that the retaining feature 30 can be a detent 40 (shown in FIG. 6) defined within the surface of the vessel 16, wherein the detent 40 can either be defined within the interior surface 24 or the exterior surface 28, depending upon the location of the induction layer 14 in relation to the vessel 16. In various embodiments, the retaining feature 30 can be a protrusion 42 that extends outward from the interior or exterior surface 24, 28 of the vessel 16. Whether the retaining feature 30 is a detent 40, protrusion 42, a combination thereof, or some other feature defined within the surface of the vessel 16, the retaining feature 30 is configured to receive a surface of the induction layer 14 and retain, at least through an interference fit, the induction layer 14 to a surface of the vessel 16. Where the induction layer 14 is disposed on the exterior surface 28 of the vessel 16, an inner surface of the induction layer 14 is electromagnetically formed to the contour of the retaining feature 30. In this manner, the induction layer 14 forms a cooperating profile with the retaining feature 30. It is further contemplated that the outer surface of the induction layer 14 can be similarly formed to the vessel 16 against an interior surface 24 of the vessel 16. In various embodiments, the vessel 16 can include two induction layers 14, wherein a first induction portion 50 is engaged against the exterior surface 28 of the vessel 16 and a second induction portion 54 is engaged against the interior surface 24 of the vessel 16, wherein a portion of the vessel 16 is disposed between the first and second induction portions 50, 54.

Referring again to the embodiment illustrated in FIGS. 2 and 3, the retaining feature 30 of the induction pan 10 is configured to provide an interference engagement between the vessel 16 and the induction layer 14 such that when the induction layer 14 is electromagnetically formed to a surface of the vessel 16, the induction layer 14 will be substantially retained on the vessel 16 and prevented from sliding, twisting, or otherwise moving against or being removed from the vessel 16. It is contemplated that the retaining feature 30 is integrally formed within the surface of the vessel 16, wherein the vessel 16 includes a single integral piece. The retaining feature 30 can be a continuous feature extending around the vessel 16, or can be a plurality of individual features that form the retaining feature 30. The retaining feature 30 can also be a single protrusion 42 or detent 40 in a portion of the exterior or interior surface 28, 24 of the vessel 16.

In the various embodiments, the vessel 16 is substantially clear and includes a low thermal expansion glass. It is also contemplated that the vessel 16 can be made of various materials that are at least partially translucent and have low coefficients of thermal expansion, wherein such materials include, but are not limited to, ceramic glass, borosilicate glass, low thermal expansion ceramics, heat resistant glass, and other similar materials. In the various embodiments, the vessel 16 used in the induction pan 10 can be made in various shapes and sizes for use within induction cooking appliances 12. The induction pan 10 can take the form of sauce pans, cooking pots, baking pans, and any other type of cooking vessel 16 that can be used in cooperation with an induction cooking appliance 12. In various embodiments, a non-stick layer can be disposed on an interior surface 24 of the vessel 16 to substantially prevent foods sticking thereto.

Referring now to the embodiment illustrated in FIGS. 3-6, the induction layer 14 is configured to be contoured over at least a portion of the vessel 16, such that when the induction pan 10 is placed upon an induction cooking surface, the operation of cooking through induction, as described above, can be accomplished to cook various food items. It is contemplated that the induction layer 14 can include a single integral piece that is formed across at least the base 18 of the vessel 16. In various embodiments, the induction layer 14 can include a first induction portion 50 disposed around the sidewall 20 of the vessel 16, wherein the sidewall 20 includes a first retaining feature 52, such as a protrusion 42 or detent 40. The induction layer 14 can also include a second induction portion 54 disposed proximate the base 18, wherein the second induction portion 54 engages a second retaining feature 56. It is contemplated that additional induction portions can be disposed on a surface of the vessel 16, depending upon the size and shape of the vessel 16 and the nature of the cooking operations to be conducted within the induction pan 10.

In the various embodiments, it is contemplated that the electromagnetically contoured induction layer 14 can be made of various materials that are both ferromagnetic and electrically conductive, where such materials include, but are not limited to, iron, nickel, cobalt, alloys thereof, metal oxide hybrids, and other various materials that are both ferromagnetic and electrically conductive. The ferromagnetic properties of the material are needed to provide the induction pan 10 with the properties necessary to operate in conjunction with an induction cooking appliance 12. The electrically conductive properties of the material are needed such that the induction layer 14 can be electrically formed to a surface of the vessel 16, as will be described more fully below. It is contemplated that, in various embodiments, the induction layer 14 can be made up of more than one material, wherein one material is ferromagnetic and another material is electrically conductive. In such an embodiment, the two materials would be combined such that the necessary ferromagnetic and electrically conductive properties can be included within the induction layer 14. The combination of such materials can be accomplished through creating an alloy of various metals, or by forming a structure where the ferromagnetic material and the electrically conductive material are mechanically combined by one of various operations that include, but are not limited to, layering, weaving, using alternating bands of dissimilar metals, and other various combining operations that are sufficient to distribute the ferromagnetic and electrically conductive properties evenly across the surface of the induction layer 14.

Referring now to the embodiment illustrated in FIG. 6, it is contemplated that a covering layer 60 can be directly engaged to an outer surface of the electromagnetically contoured induction layer 14, wherein the covering layer 60 also engages at least a portion of the exterior surface 28 of the vessel 16. In such an embodiment, the electromagnetically contoured induction layer 14 can be disposed between the vessel 16 and the covering layer 60. It is contemplated that the covering layer 60 can be the same material as the remainder of the vessel 16, or can be a dissimilar material that is attached to the outer surface of the vessel 16. It is contemplated that the covering layer 60 is made of a material that can substantially withstand damage and deformation as a result of heat emanating from the induction layer 14 during cooking.

In the various embodiments, it is contemplated that the covering layer 60 can cover an interior portion of the vessel 16 and the induction layer 14, wherein the induction layer 14 is formed to the interior surface 24 of the vessel 16. In such an embodiment, the cover layer can include any one of various materials, including materials similar to that of the vessel 16. The covering layer 60 can also include a non-stick or other coating that is exposed to the inner volume 26 to substantially prevent food items from sticking to the vessel 16.

In embodiments where a cover member is used, the cover member can help to prevent damage to the induction layer 14 as a result of cleaning, impact, cooking and other wear conditions.

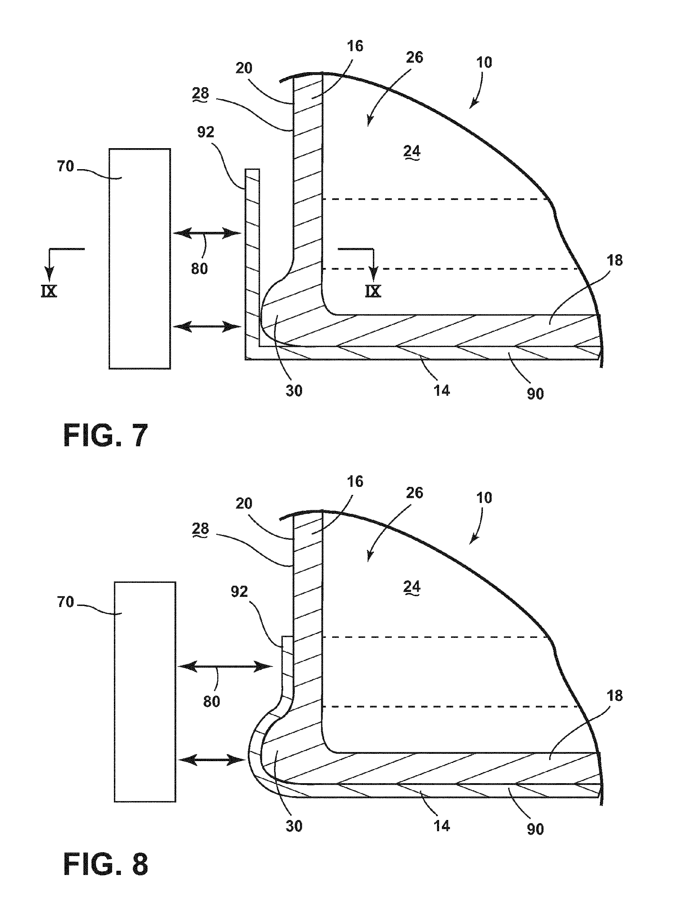

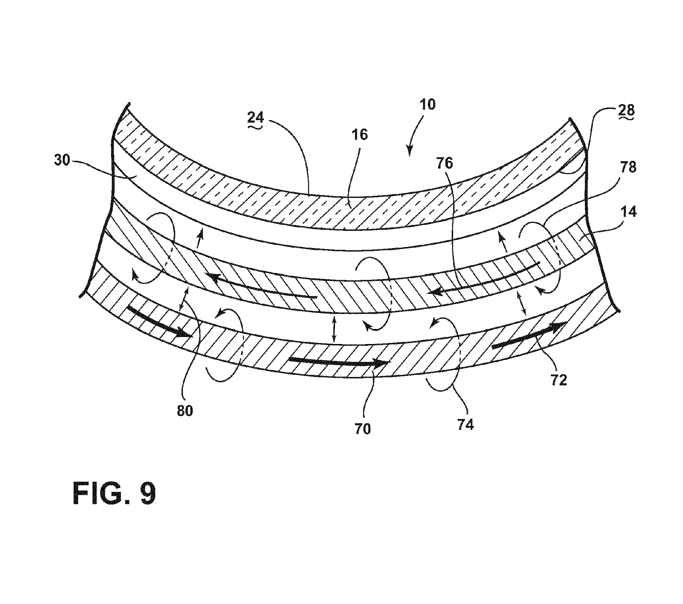

Referring now to the embodiments illustrated in FIGS. 7-9, the induction layer 14 is formed to a surface of the vessel 16 through a process of electromagnetic forming. In this process, the vessel 16 is placed proximate the induction layer 14 and the induction layer 14 and the vessel 16 are placed together within an electromagnetic field generator 70. In various forms of electromagnetic forming, the electromagnetic field generator 70 uses an electromagnetic pulse 72, such as a brief electrical current, through the electromagnetic field generator 70. The electromagnetic pulse 72 creates a primary magnetic field 74 around the electromagnetic field generator 70. The vessel 16 and the induction layer 14 are placed within the electromagnetic field generator 70, such that the electromagnetic field generator 70 and the induction layer 14 are in electromagnetic communication with one another. In this manner, as the primary magnetic field 74 is generated by the release of the electromagnetic pulse 72, an induced electrical current 76 is created within the induction layer 14, wherein the induced electrical current 76 runs in a direction opposite to the electromagnetic pulse 72 running through the electromagnetic field generator 70. The induced electrical current 76 within the induction layer 14 also creates an induced magnetic field 78 around the induction layer 14. This induced magnetic field 78 is in opposition to the primary magnetic field 74 created by the electromagnetic field generator 70. In this manner, the combination of the primary magnetic field 74 and the induced magnetic field 78 creates a repulsive force 80 that drives the induction layer 14 away from the electromagnetic field generator 70. In this manner, the induction layer 14 is pushed away from the electromagnetic field generator 70 and toward a surface of the vessel 16, resulting in the induction layer 14 being formed to a surface of the vessel 16.

It is contemplated that this electromagnetic forming process can be accomplished with induction pans 10 having various shapes and sizes that include, but are not limited to, oval, square, rectangle, round, and other various geometric shapes, as well as pans with varying types of handles, lids, and other accessories. In various embodiments, the electromagnetic forming process can be used to form an induction layer 14, such that the induction layer 14 covers the entire exterior surface 28, or the entire interior surface 24, up to, and potentially covering, the rim 22 of the vessel 16.

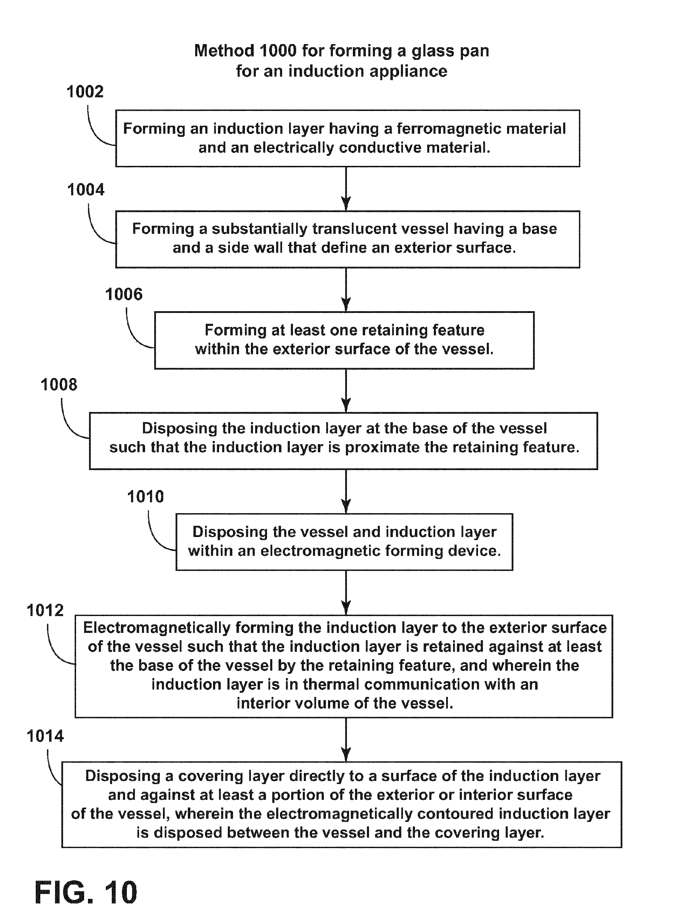

Referring now to FIG. 10, having described the induction pan 10 and the formation of the induction layer 14 upon the vessel 16, a method 1000 for forming an induction pan 10 for an induction cooking appliance 12 is disclosed. The method 1000 includes forming an induction layer 14 having a ferromagnetic material and an electrically conductive material (step 1002). As discussed above, the induction layer 14 can be made of a single homogenous material that has both ferromagnetic and electrically conductive characteristics. Alternatively, the induction layer 14 can be made of a combination of materials, wherein at least one material has ferromagnetic properties and at least one material has electrically conductive properties.

According to FIG. 10, the method 1000 also includes forming a substantially translucent vessel 16 having a base 18 in a sidewall 20 that defines an exterior surface 28 (step 1004). This vessel 16 can take one of many shapes consistent with the various shapes of pans seen in commercial and residential kitchens. Additionally, the method 1000 includes forming at least one retaining feature 30 within a surface of the vessel 16 (step 1006). It is contemplated that the retaining feature 30 can be either a protrusion 42, a detent 40, or both. The retaining feature 30, whether a protrusion 42, detent 40, or both, serve the purpose of providing an interference connection between the induction layer 14 and the vessel 16 after the induction layer 14 has been formed to a surface of the vessel 16.

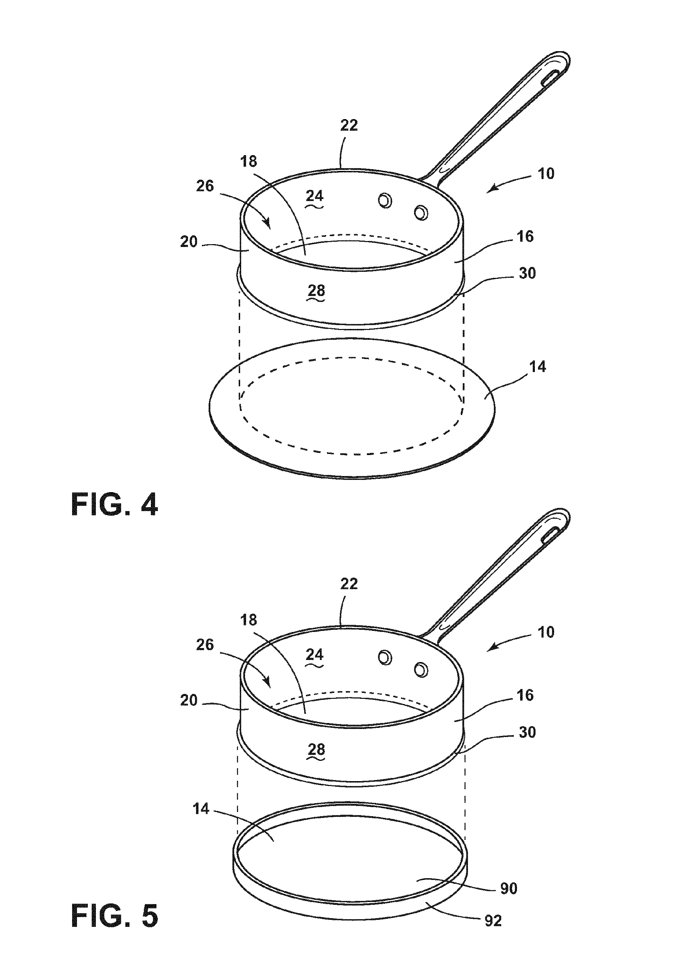

Referring again to FIG. 10, the method 1000 includes disposing the induction layer 14 at at least the base 18 of the vessel 16 such that the induction layer 14 is proximate the retaining feature 30 (step 1008). According to the method 1000, the vessel 16 and induction layer 14 are disposed within an electromagnetic forming device (step 1010). When the vessel 16 and the induction layer 14 are disposed within the electromagnetic forming device, the induction layer 14 can be a substantially flat member that will be formed upward and around the surface of the vessel 16. In various embodiments, the induction layer 14 can also include a horizontal member 90 (shown in FIGS. 5 and 7) that engages a base 18 of the vessel 16 and a vertical member 92 (shown in FIGS. 5 and 7) that extends around the base 18 that is configured to engage at least a portion of the sidewall 20 of a vessel 16.

As illustrated in FIG. 10, the method 1000 includes electromagnetically forming the induction layer 14 to the exterior surface 28 of the vessel 16 such that the induction layer 14 is retained against at least the base 18 of the vessel 16 by the retaining feature 30 (step 1012). In this manner, the induction layer 14 is placed in thermal communication with an inner volume 26 of the vessel 16. As discussed above, this forming step can include forming a substantially flat induction layer 14 upward and around at least a portion of the sidewall 20 of the vessel 16. Alternatively, forming the induction layer 14 can include a multi-step process wherein the induction layer 14 is first formed to include the vertical member 92 that extends upward from the horizontal member 90. After the vertical member 92 is formed, the induction layer 14 is then placed proximate the vessel 16 and within the electromagnetic forming device.

Referring again to FIG. 10, in various embodiments, the method 1000 can also include disposing a covering layer 60 directly to a surface of the induction layer 14 and against at least a portion of the exterior or interior surface 28, 24 of the vessel 16, wherein the electromagnetically contoured induction layer 14 is disposed between the vessel 16 and the covering layer 60 (step 1014). It is contemplated that the covering layer 60 can be disposed around the induction layer 14 to provide protection from the induction layer 14 being damaged during use. In particular, the covering layer 60 can substantially prevent rust from forming on the induction layer 14, where the induction layer 14 is made of a material that may be susceptible to corrosion as a result of being exposed to moisture.

## Claims

1. An induction pan (10) for an induction cooking appliance (12) comprising:
an electromagnetically contoured induction layer (14), wherein the electromagnetically contoured induction layer (14) is ferromagnetic and electrically conductive;
a vessel (16) having a base (18), a sidewall (20) extending from the base (18) and defining a rim (22), an interior surface (24) defining an inner volume (26), and an exterior surface (28), wherein the vessel (16) is at least partially translucent, and wherein the electromagnetically contoured induction layer (14) is engaged to at least one of the interior surface (24) and the exterior surface (28) of the vessel (16) proximate the base (18), and wherein the electromagnetically contoured induction layer (14) is in thermal communication with the inner volume (26); and
at least one retaining feature (52) extending from at least one of the interior surface (24) and the exterior surface (28) of the vessel (16), wherein the electromagnetically contoured induction layer (14) extends at least partially over the retaining feature (52).

2. The induction pan (10) for an induction cooking appliance (12) of claim 1, wherein an inner surface of the electromagnetically contoured induction layer (14) is directly engaged with the retaining feature (52), wherein the retaining feature (52) is a protrusion (42) extending from the exterior surface (28) of the vessel (16).

3. The induction pan (10) for an induction cooking appliance (12) of any preceding claim, wherein the vessel (16) includes a single integral piece and the electromagnetically contoured induction layer (14) includes a single integral piece.

4. The induction pan (10) for an induction cooking appliance (12) of any preceding claim, wherein the vessel (16) is substantially clear and includes low thermal expansion glass.

5. The induction pan (10) for an induction cooking appliance (12) of any preceding claim, wherein the electromagnetically contoured induction layer (14) includes a first induction portion (50) disposed on the sidewall (20) and a second induction portion (54) disposed on the base (18).

6. The induction pan (10) for an induction cooking appliance (12) of any preceding claim, wherein the vessel (16) includes borosilicate.

7. The induction pan (10) for an induction cooking appliance (12) of any preceding claim, further comprising:
a covering layer (60) directly engaging an outer surface of the electromagnetically contoured induction layer (14) and at least a portion of the exterior surface (28) of the vessel (16), wherein the electromagnetically contoured induction layer (14) is disposed between the vessel (16) and the covering layer (60).

8. The induction pan (10) for an induction cooking appliance (12) of claims 1 or 3-7, wherein an inner surface of the electromagnetically contoured induction layer (14) is directly engaged with the retaining feature (52), wherein the retaining feature (52) is a detent (40) defined within the exterior surface (28) of the vessel (16).

9. The induction pan (10) for an induction cooking appliance (12) of claims 1 or 3-8, wherein the retaining feature (52) is a detent (40) defined within the interior surface (24) of the vessel (16).

10. The induction pan (10) for an induction cooking appliance (12) of claims 1, 3-6 or 9, wherein the induction layer (14) is disposed against the interior surface (24) of the vessel (16).

11. The induction pan (10) for an induction cooking appliance (12) of claims 1, 3-6 or 10, wherein the covering layer (60) directly engages an inner surface of electromagnetically contoured induction layer (14) and at least a portion of the interior surface (24) of the vessel (16), wherein the electromagnetically contoured induction layer (14) is disposed between the vessel (16) and the covering layer (60).

12. The induction pan (10) for an induction cooking appliance (12) of any preceding claim, wherein the covering layer (60) is substantially clear and includes low thermal expansion glass.

13. The induction pan (10) for an induction cooking appliance (12) of any preceding claim, wherein the covering layer (60) includes borosilicate.

14. The induction pan (10) for an induction cooking appliance (12) of claims 1-8 or 12-13, wherein a non-stick covering is disposed on at least a portion of the interior surface (24) of the vessel (16).

15. A method for making the induction pan (10) for an induction cooking appliance (12) according to claim 1, the method including the steps of:
forming an induction layer (14), wherein the induction layer (14) includes a ferromagnetic material and an electrically conductive material;
forming a substantially translucent vessel (16) having a base (18) and a sidewall (20) extending from the base (18) that define an exterior surface (28) and an interior surface (24) that defines an inner volume (26);
forming at least one retaining protrusion (42) extending from at least one of the interior surface (24) and the exterior surface (28) of the vessel (16);
disposing the induction layer (14) at the base (18) of the vessel (16) proximate the at least one retaining protrusion (42); and
electromagnetically forming the induction layer (14) to at least one of the interior surface (24) and the exterior surface (28) of the vessel (16), wherein the induction layer (14) is in thermal communication with the inner volume (26) of the vessel (16), and wherein the induction layer (14) engages at least the base (18) of the vessel (16) and the at least one retaining protrusion (42).
